# EUROPEAN PATENT APPLICATION

(11) **EP 3 040 924 A1**
(43) Date of publication of application: **06.07.2016**
(21) Application number: 15382214.3
(22) Date of filing: 28.04.2015
(51) Int. Cl.: G06Q 20/32, H04L 29/06, H04W 12/06

(54) **METHOD AND SYSTEM FOR PROVIDING DEVICE BASED AUTHENTICATION, INTEGRITY AND CONFIDENTIALITY FOR TRANSACTIONS PERFORMED BY MOBILE DEVICE USERS**

(30) Priority: 30.12.2014 EP 14382580
(71) Applicant: Telefonica Digital España, S.L.U., 28013 Madrid (ES)
(72) Inventor: CHANA, Sukjinder, Singh, 28013 MADRID (ES)
(74) Representative: Carpintero Lopez, Francisco

(57) **Abstract**

Present invention refers to a device based method, system and application for providing authentication, integrity and confidentially for transactions performed by a user of a mobile device. This technical solution seeks to leverage existing standards practices to enable Authenticity, Integrity and Confidentiality to be managed effectively from within the secure confines of an embedded Secure Element (eSE) and/or a Trusted Execution Environments (TEE) of the device.

## Description

### TECHNICAL FIELD OF THE INVENTION

Present invention relates to a device based method and system for authenticating mobile device users, guaranteeing both the integrity and confidentiality of user's information or instructions and ensuring the integrity of transactions.

### BACKGROUND OF THE INVENTION

Different payment architectures are used every day by millions of people worldwide to facilitate various types of commercial transactions. EMV ("Europay, MasterCard and Visa") is a global standard for commercial transactions. The present invention concept leverages the technical aspects of EMV in order to mitigate risk, developing at the same time MNO specific solutions.

EMV defines common standards against which they or other application providers can implement. Service provider's (banks) utilizing applications certified to scheme standards can be sure that, when they receive a request to authorize a transaction, that the request has been made by a genuine card issued by the bank, by the person to whom they issued the card and it has not been tampered with on route to the bank. These three pieces of information when combined with information on the status of the account from which funds are being requested, allow the bank to make a risk based decision relating to the approval of the transaction. They also make the decision safe, because if the transaction turns out to be fraudulent they will not carry the liability.

VSDC, MChip and other such standards achieve this degree of certainty through the use of cryptography. The bases of these techniques are secret keys that are known only to the bank and card. They are stored securely in the payment card and are used to encrypt and/or sign sensitive data being exchanged between card and bank. The data being signed includes the transactional value and the result of the PIN (Personal Identification Number) verification. The secret nature of the keys and the algorithms used ensure that the data received by the bank is tamperproof, confidential and reliable. The concept described in this disclosure follows some of these principles to achieve the same effect through an application stored in an eSE embedded Secure Element (eSE) or running under a Trusted Execution Environment (TEE).

Near Field Technology (NFC) was heralded as the technology that would allow the mobile operator to participate in the world of EMV payments, however it has resulted in an inability to create a viable business case for NFC card issuance. In addition to this, some of the technical challenges of SIM centric NFC issuance have led to the creation of components in the NFC ecosystem that have added cost to the business case for NFC compounding the issue.

Amongst all this turmoil Mobile Network operators (MNO) have also emerged as potential players in the world of payments. However, the role of the mobile operator in the world of mobile EMV payments is therefore now threatened due to technical advances which are heading to solutions that don't have a role for the operator to fulfil beyond that of connectivity provider. The mobile operators need something to get them back to a revenue earning position.

Priority Patent application EP14382580 by Telefonica described a SIM based solution capable of providing insecure client applications with generic security management functions. The solution that was the subject of Patent application has the primary functions of Authenticity and Integrity Management. High end mobile handset architectures are moving towards the inclusion of an eSE or TEE, linked to the mobile device, which offer an alternative to SIM based security, which is as strong as that offered by the SIM. These environments offer hardware based secure environments under which an application may be executed. This disclosure outlines a device based application that utilizes the secure environment provided by an eSE or TEE.

Hence, there is a need of a technical solution in the area of mobile payments which:
1. Allows the mobile operator to play a part in the delivery of mobile NFC payments
2. Is not encumbered with expensive or difficult application deployment processes
3. Includes application components who's lifecycle can be simply managed
4. Enhances the security of new and emerging technologies such as Host Card Emulation (HCE).
5. Complements emerging payment solutions such as tokenization and cloud payments
6. Offers the MNO options to develop services independently
7. Is reusable in other services provided by the mobile operator
8. Reuses EMV principles and offers EMV level capability
9. Allows the mobile operator to assess risk and manage liability during the delivery of any service and trade of liability for revenue share.
10. Allows the mobile operator to provide support for solutions that rely on the embedded hardware security features available in some high end mobile devices.

### SUMMARY OF THE INVENTION

Present invention solves the prior problems and achieve the aforementioned advantages, by providing a device based method and system for Authenticity and Integrity Management in user transactions performed via an user equipment (user device) such as a mobile device, a mobile telephone, an smart phone, a laptop, a PC or any other type of electronic user equipment. The technical solution proposed is called Device AIM (Authenticity and Integrity Management) or DAIM.

This technical solution seeks to leverage existing payment standards (such as EMV) practices to enable Authenticity and Integrity to be managed effectively through a device based hardware security mechanism. The proposed solution allows using a generic application that is not personalized at source with the secrets of any individual user or relying party, in a way that is simple for both operator and payment issuer to set-up, applicable to multiple business cases, allowing the mobile operator freedom to development independent services, applicable to multiple business cases, without forcing specific business partnerships and allowing access to all service providers.

Central to the proposed technical solution is the deployment of a Device based Authentication and Integrity Management, DAIM, application into an embedded Secure Element (eSE) or a Trusted Execution Environment (TEE) of the device processor. The eSE and the TEE are device based secure environments under which an application may be executed. The secure application manages user authentication, transactional integrity and data confidentiality for any client application that delegates these tasks to it. These functions are managed through data attributes in the form of security secrets, cryptographic keys to drive generic and/or specific functional algorithms that are executed within the secure environment provided by the eSE or TEE. For TEE usage, specifically the DAIM application would be designed to work in secure mode only. In addition to this there may be API libraries that make up the DAIM software development kit (SDK).

The DAIM is thus tasked with ensuring that any entity relying on it can determine not only the authenticity of the DAIM they are talking too but also the person to whom the DAIM belongs and ensuring the confidentiality of any cryptographic keys or data it requires to maintain integrity and authenticate a user.

The task assigned to DAIM is to authenticate users, guarantee both the integrity and confidentiality of information or instructions provided by that user and ensure the integrity of transactions sent to DAIM for processing. DAIM achieves this by using the data attributes set by the relevant parties and processing the input data using functional algorithms. The functions fall into three broad categories: User authentication functions (using data known only to the application user), Generic cryptographic capabilities (as Encrypt, Decrypt, Sign or Hash) based on symmetric keys and Application specific algorithms (as Payment Token Management or Payment Cryptogram Generation).

The DAIM in conjunction with API's available through the SDK, could be used by application developers to build service clients that delegate security management to the DAIM. Use of DAIM in these applications ensures that anyone relying of information from a remote service protected by DAIM can be sure that the information they receive is genuine and originating from the person they have business relationship with. Service providers (known as DAIM consumers) deliver services and client applications that delegate security and user authentication to DAIM. They must bind their service to DAIM through a onetime process that allows them to establish the trusted link between themselves and the DAIM user. The consumer may validate/supplement the information they hold on their subscriber with details held by the mobile operator (DAIM issuer).

In a first aspect, it is provided a method for providing an authentication, integrity and confidentially service for transactions performed between a user of a first mobile device and a provider of user services through a mobile communications network, the method comprising the following steps:
a) Receiving from the user by the first mobile device, at least a transaction request for a provider of user services;
b) For each transaction request received:
   b1) A first application of the first mobile device, verifying user identity for the authentication, integrity and confidentially service, where the first application has been loaded (and afterwards, executed) in an embedded Secure Element, eSE, of the first mobile device or in a Trusted Execution Environment, TEE, (e.g. of a microprocessor) of the first mobile device;
   b2) If the user identity verification is successful, the first application preparing, at least one message to be sent to the provider of user services including transaction information and for each message prepared related to each transaction, the first application calculating a signature for each message using an unique asymmetric key and including said signature in the message;
   b3) The first mobile device, sending the at least one prepared message to a server of the provider of user services through the mobile communications network.

This way, the security mechanism (the first application) is available on and linked to an individual mobile device (the first mobile device). The interaction between the first application and the user of the mobile device (for example, to send/receive the transaction request, to enter the PIN...) may be done using a second application installed in the first mobile device and the user access to the provider of user services may be done by the second application. The first application may have a unique identification associated to the eSE or to the TEE of the first mobile device (for example an ICCID).

In a second aspect, it is provided a system for providing an authentication, integrity and confidentially service for transactions performed between an user of a first mobile device and a provider of user services through a mobile communications network, the system comprising the first mobile device comprising:
- Means for receiving from the user, at least a transaction request for the provider of user services;
- An embedded Secure Element, eSE, where a first application has been previously loaded, where the first application is configured to, for each transaction request received by the mobile device:
   - Verifying user identity for the authentication, integrity and confidentially service;
   - If the user identity verification is successful, preparing at least one message to be sent to the provider of user services including transaction information and for each message prepared related to each transaction, calculating a signature for each message using an unique asymmetric key and including said signature in the message;
- Means for sending the at least one prepared message related to each transaction, to a server of the provider of user services through the mobile communications network.

In a third aspect, it is provided a system according to the second aspect where instead of the eSE, the first mobile device includes a Trusted Execution Environment (for example, in a microprocessor of the first mobile device) where the first application is loaded and executed.

In a fourth aspect, it is provided an application for providing an authentication, integrity and confidentially service for transactions performed between an user of a first mobile device and a provider of user services through a mobile communications network, the application comprising:
- Means for, for each transaction request received in the first mobile device:
- Verifying user identity for the authentication, integrity and confidentially service;
- If the user identity verification is successful, preparing at least one message to be sent to the provider of user services including transaction information and for each message prepared related to each transaction, calculating a signature for each message using an unique asymmetric key and including said signature in the message;

Another aspects of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware. A digital data storage medium is also provided for storing a computer program which comprises instructions causing a computer executing the program to perform the above-described method

Further particular and preferred aspects, embodiments and details of the invention are set out in the accompanying independent and dependent claims.

The proposed invention implies many advantages, as for example:
- A critical feature of the ecosystem supporting DAIM is that DAIM can be deployed onto any eSE or compiled to run under a generic TEE. The application can then provide security services to any insecure client application that is authorised to use them through standard interfaces provided by the host device (the first mobile device).
- Device AIM allows service providers and application developers to integrate hardware based security into their applications through a single entity that has access to all mobile devices in the market. Mobile operators are the natural choice for this role as they support multiple devices from many device manufacturers.
- Mobile operators wishing to innovate and build payment solutions of their own can leverage the power of the Trusted Execution Environments (TEE) or embedded Secure Elements (eSE). In both instances the operator would be able to provide the handset manufacturers with a generic security application that is installed onto all mobile devices shipped to them by a device manufacturer. More importantly if this technology is standarized, it can be made a standard requirement on all mobile devices that support eSE or TEE. Moreover, DAIM can allow the operator to build commerce applications and other secure environments which they can control and manage along with the ability to foster new working partnership with the existing markets such as the payments industry.
- Global Strategy and Standardization: DAIM is capable of reaching mass scale with little effort. Coupling DAIM with an operator strategy that ensures that AIM is a standard component of their device specification through an industry body such as the GSMA would result in DAIM being available on all newly issued mobile devices that support an eSE or TEE. Those legacy devices in the field could be retrofitted with DAIM.
- Simplicity: From the MNO's perspective appeal of the DAIM is its simplicity and the fact that it can operate in a standalone capacity if required. This capability ensures that DAIM can work with minimal support from the MNO, reuse the existing device retailing and management processes; thus removing the need for expensive partnerships with trusted service managers. From a service provider's perspective ease of use is also a driving factor. DAIM consumers can build standalone services by getting Issuer approval of their applications and the DAIM CA's certificate. More sophisticated applications can be built through agreements with other DAIM ecosystem players.
- Multiple use cases: DAIM is not specific for one scenario or application. The generic nature of DAIM ensures that it can be integrates many use cases beyond that of the payments industry.
- Security: Due the very secure nature of the eSE and TEE, applications utilising DAIM are assured levels of security comparable to those being enjoyed by existing EMV applications on plastic cards.
- Operate Offline: Since DAIM is designed to authenticate locally, the mobile device hosting DAIM does not need to be connected to the mobile network when being used to deliver a service. The dependencies for connectivity are driven by the service and the service client.

### DESCRIPTION OF THE DRAWINGS

Embodiments of the invention will now be further described with references to the drawings in which:
Figure 1 shows a block diagram of the Device AIM ecosystem (secure hosting environment) according to one embodiment of the present invention.
Figure 2a shows a diagram with the operational interactions between the different Device AIM entities according to an embodiment of the invention in which the Device AIM application is installed in an embedded secure element of the device.
Figure 2b shows a diagram with the operational interactions between the different Device AIM entities according to an embodiment of the invention in which the Device AIM application is installed in a Trusted Execution Environment of the device.
Figure 3 shows a block diagram of the activation infrastructure according to an embodiment of the invention.
Figure 4 shows a block diagram of the service binding infrastructure according to an embodiment of the invention.

### DETAILED DESCRIPTION OF THE INVENTION

The invention describes a device based (within the secure environment provided by the eSE or TEE) method, system and application for, in general terms, authenticating users, guaranteeing both the integrity and confidentiality of transactions information or instructions provided by that user and ensure the integrity of transactions. The acronym Device AIM, DAIM (or only AIM) will be used to refer to the proposed technology and to the device based application that is central to the concept.

Device AIM implements the capabilities of the application disclosed in Patent application EP14382580, through specific deployment and implementation channels associated with a handset (mobile device) and its hardware based security features (so the features are applicable to security mechanism available and linked to associated to an individual mobile device, series of mobile devices and/or specific mobile device brands). This disclosure also adds details to the definition of AIM contained in EP14382580 that would support the installation of AIM onto a device supporting native hardware security mechanisms such as eSE or TEE.

Hardware based security is a concept that has existed in the world of secure processing for many years. The concept is based upon the creation of specific machines or electronic components whose function is to provide security services and ensure that cryptographic or other confidential information is never available in readable form in the external environments. To this end this genre of device ensures that confidential data is always protected with cryptographic keys, all processing is done within the device and that when confidential data is existing in clear text formats it is does so in volatile internal memory that cannot be accessed by processes outside the confines of the device. As such hardware based security mechanisms are considered superior to any software solution design to perform a similar function. For mobile devices three options exist for the provision of a hardware based security solution, the SIM, embedded secure element (eSE) and trusted execution environment (TEE). As stated before, the TEE and the eSE are the hardware based security solutions used in the present application (where the DAIM application is stored and executed and main DAIM data is stored).

The Subscriber Identity Module (SIM) is the traditional hardware security device available on all GSM mobile devices to date. An embedded secure element (eSE) is a tamper-resistant platform (e.g. a one chip secure microcontroller) capable of securely hosting applications and their confidential and cryptographic data (e.g. key management) in accordance with the rules and security requirements set forth by a set of well-identified trusted authorities; the embedded secure element is integrated in the device (e.g. a mobile phone) and, typically, it is not removable by the user. A standard mobile operator Subscriber Identity Module (SIM) and embedded secure element are essentially two different form factors of similar devices. They may be both based on similar low level electronics and differentiated by, among others, the fact that a SIM is packaged to be inserted into the appropriate interface on the mobile device and comes with a pre-installed telecoms specific application, whereas the eSE is packaged as an integrated circuit with no pre-installed components. The SIM and eSE thus offer similar levels of security and functionality and more importantly security that is equal to that provided, for example, by a standard chip based EMV card. The SIM is portable and hosts the control parameters required to connect to an operator's specific network.

Trusted execution environments (TEE) are a more recent development which are designed to offer hardware based security through the microprocessor that is at the centre of the electronic device or computer. Generally speaking, a TEE is a is a secure area of the main processor of an electronic device which guarantees code and data loaded inside to be protected with respect to confidentiality and integrity It ensures that sensitive data is stored, processed and protected in a trusted environment. The TEE's ability to offer safe execution of authorized security software, known as 'trusted applications', enables it to provide end-to-end security by enforcing protection, confidentiality, integrity and data access rights. The TEE as an isolated execution environment is providing security features such as isolated execution, integrity of Trusted Applications along with confidentiality of their assets. A TEE enabled microprocessor has the ability to create an extremely strong virtual barrier around sensitive resources such that general programs cannot access either the memory or the processes. All TEEs operate in secure or standard mode and the applications running within the device are designed to be standard or secure mode applications. In lay terms when the microprocessor is switched to secure mode all standard mode processes are halted ensuring malicious uncontrolled software cannot gain access to any resources or data moving across the data buses. Integrity is maintained by authorities assigned to police the TEE scheme. These authorities vet any application applying for secure privileges before allowing it to be distributed to the devices. This mechanism ensures that only trusted application operates within the TEE but importantly that the TEE is as secure as the SIM or eSE.

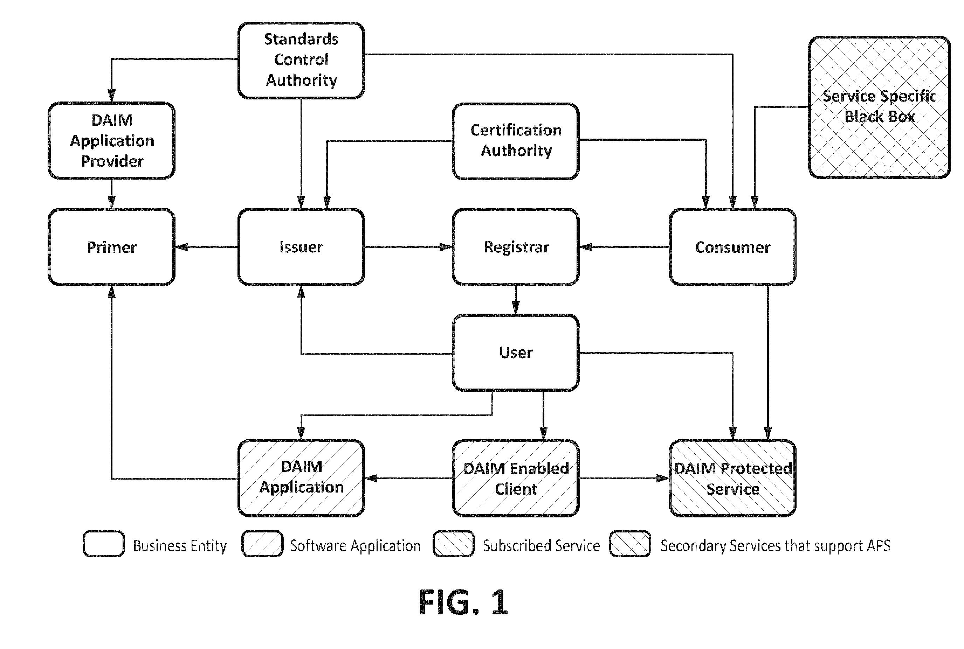

Whilst DAIM can work in a standalone mode it does benefit from inclusion into a defined secured environment ("ecosystem"). According to an embodiment, the DAIM ecosystem consists of a number of administrative roles/functions and technical components (which may interact to enrich the abilities of DAIM) as disclosed in figure 1. The roles within DAIM ecosystem may be (some of them are mandatory and some of them are optional):
Standards Control Authority (SCA): It is responsible for owning the technical specification and defining the rules and regulations and regulations under which DAIM will operate.

Device AIM Primer (AP): It is responsible for the creation of a DAIM instance and initializing it in advance of activation. The DAIM Primer is thus responsible for loading the unique and confidential DAIM keys belonging to the issuer and Initial UVM key/PIN, setting and guaranteeing uniqueness of DAIM ID and Performing DAIM initialization within a controlled environment either in situ or via an OTA process.

Device AIM Issuer (Al): It is the entity responsible for providing the hosting environment for a DAIM instance and the management of the DAIM lifecycle. It may be the Mobile Network Operator (MNO). In other words, the DAIM Issuer can be seen as the mobile operator who has issued the DAIM and with whom the DAIM user has a business relationship. It must make DAIM available on their devices and support the processes needed to activate a DAIM instance, support Registration, manage the DAIM Lifecycle, control DAIM Reset and manage the revocation of all DAIM IDs, DAIM PINs and PKC's reported to be compromised. The DAIM issuer also holds a direct relationship the DAIM User in the form of a mobile subscription.

Device AIM Certification Authority (CA): It is responsible for establishing the chain of trust necessary to enable a DAIM Consumer to validate an DAIM response. As such the DAIM CA will provide the root certificate that will be used to sign all MNO public keys that in turn sign DAIM certificates and ensure only approved consumers can load keys to DAIM.

Device AIM Consumer (AC): It is any relaying party who incorporates DAIM into their products or service and delegates some or all of the Authentication and Integrity management components of their service to DAIM and it is reliant on the information generated by DAIM.

Device AIM registrar: It is responsible for registering DAIM users and Consumers and for the assertion or provision of a user's identity. It validates DAIM User's identity against internal references for Non-Validated usage, executes external Know Your Customer (KYC) processes necessary for Validated DAIM use cases, maintains the relationship between the DAIM ID and the DAIM User's real world identity, confirms and provides of an DAIM User's identity attributes, registers Consumers and Issuing Consumer credentials...

Device AIM User: The individual to whom a DAIM service (application) has been issued and who has initialized the DAIM with its own PIN. It is the principle owner of a DAIM instance and is responsible for requesting activation of the DAIM, initializing it with their personal DAIM PIN and/or a unique UVM key and binding it to any DAIM protected services that they subscribe to.

Application Provider: It is the entity who decides to implement DAIM and provide Issuers or Primers with a realization of the DAIM technical specification defined by the SCA.

Service specific black box: It is composed by the business entities, infrastructures and technical components that allow a DAIM user to consume the DAIM protected service (e.g a payment service).

In an embodiment, the more active components/roles within DAIM ecosystem may be:
Device AIM application (or only DAIM): It is the device based application (functional module) that can manage user authentication and transactional integrity using its internal attributes, personal keys and/or keys loaded to it by an DAIM consumer. So it is a device based authenticity and
integrity management application.. It is stored (and executed) in an eSE or TEE of the user's mobile device. Each DAIM application (or instance) has a globally unique identity and can be associated with single or multiple services through a service provider process coupled with service APIs exposed by the issuer
Device AIM Enabled Client (AEC): It is an application that can be downloaded to the mobile device and which allows a user to access services provided by a DAIM Consumer. The AEC delegates user authentication and transactional integrity management to the DAIM application stored on the eSE or the TEEof its host device (mobile device).
Device AIM Protected Service (APS): It refers to any service provided by a business entity that delegates user authentication to DAIM. The service provider uses the DAIM SDK to access a DAIM instance through a certified client application.

DAIM possesses a several discreet capabilities and employs attributes which are designed to propagate integrity, prove authenticity and maintain confidentiality. These along with the secure environment on the host device and the secure processes used to issue and manage the DAIM, result in integrity being baked into the solution. The following sections describe the Attributes and Capabilities and other interesting DAIM aspects:
**DAIM Attributes:** It is not mandatory to use all the attributes in all embodiments and/or applications.
   Issuer Defined Attributes (IDA): They are controlled by the issuer and set during the provisioning process and are not known to the consumer or the user.
   DAIM ID: It should uniquely identify a DAIM instance (application) within a global domain. Each DAIM can be linked to the Integrated Circuits Component Identifier (ICCID) that exist on all secure elements or to any other identification, alternatively it can be seeded with a unique identity that uses domain based categorization as employed in construction of internet addresses.
   Device AIM MAC Key - AMK: Each DAIM instance is loaded with a Message Authentication Code (MAC) key. It is used by the external security management entities to authorise commands that permanently change the state of the AIM instance or load data to be used in a secure function.
   Device AIM Unique Key - AUK: Each DAIM instance is seeded with a unique asymmetric AIM key, the public part of this key is installed in the form of the AIM public key certificate signed by the issuer. The DAIM PKC (Public Key Certificate) shall be made available to all parties needing to validate a DAIM signature or send confidential data to an aim application. The private component of the DAIM key is held securely by DAIM and never divulged to external parties. The DAIM PKC and unique key are the basis of AIM's ability to manage confidentiality and ensure integrity
   DAIM Signature: The DAIM signature would be calculated using the DAIM signing key over the data sent as part of an authentication command and include the authentication outcome. This attribute would allow a relying party to validate the status of the message being sent to it and trust the authentication status of the DAIM user.
   Authentication State: The Authentication State would be calculated by the DAIM on each request to execute UVM (User Verification Method). The state would be a binary indication defining whether the user had managed to satisfy the conditions of the chosen UVM, e.g. entered the correct PIN.
   Device AIM PUK - APUK: The PUK is used by the issuer, following an appropriate user authentication (through a customer support process) to allow a genuine user to reset their AIM PIN. The PUK is loaded during the AIM provisioning process.
   Issuer Public Key Certificate - IPKC: The AIM Issuer Public Key Certificate is used in conjunction with the AIM's own public key certificate. It is loaded to the AIM by the issuer to enable validation of the AIM public key certificate through the Certification Authority controlled Public Key Infrastructure (PKI). The issuer public key certificate is signed by the certification authority.
   Device AIM Activation Key - AAK: The issuer sends the DAIM Activation Key to the DAIM instance in response to an activation request. The key is loaded to the DAIM under the protection of the AIM unique key and its loading is authorized via a command MAC generated from the MAC key. Once loaded the key is used to validate the activation code sent to the user.
   Usage Mode: DAIM operates in three modes subject to the level of information held by the operator. Each mode gives an indication of the extent to which the issuer knows the user, the information that the issuer can provide on that user and the level to which that information has been validated. The usage mode defines which mode the DAIM is being used in and conveyed to the consumer as an indicator of the level of risk they are taking using the DAIM data
   Issuer Application Signing Key - IASK: The issuer application signing key is used to control access to AIM from unapproved AIM enabled client applications. Application providers and consumers alike must ensure that their clients are signed by the appropriate issuer application signing key before their application will be allowed to communicate with an AIM instance loaded to a device. A hash of the issuer application signing key is loaded to access controller of the host by the issuer.
   Verification Retry Counters Limits: DAIM supports a number of UVMs Each UVM method is supported by a counter that controls the number of incorrect attempts (e.g. PIN entries, UVM Key entries or authentication requests) that an DAIM user may have before the application becomes blocked.

Instance Set Attributes (ISA): They are self-generated by the DAIM application once activated and are unknown to any external parties.
DAIM LMK: The DAIM Local Master Key is internally generated by each AIM instance on first use or activation. It is a symmetric key used to protect local data for an AIM client. Device AIM Verification Result (AVR): It is a bitwise data value that is dynamically set by the AIM following each execution of a command. The AVR is returned as part of the AIM response to authentication commands and indicates which verification method was used, authentication state and the UVM along with other processing data.
Verification Retry Counters: To manage the maximum number of UVM tries DAIM supports a number of counters. The counters track the number of incorrect attempts (e.g. PIN entries, UVM Key entries or authentication requests) that a DAIM user has made and are checked against the limit set by the issuer. If a limit is exceeded the DAIM instance is blocked.
Activation Number: The activation number is a randomly generated number that is used by DAIM and the activation server to generate an activation code.
DAIM Transaction Counter: To ensure the uniqueness of each response, each DAIM is loaded with a transaction counter that is appended to the data over which the response signature is calculated and that is incremented after each transaction command. This technique ensures that a response cannot be replayed and that the digital signature for two identical authentication requests would always differ

User Controlled Attributes (UCA): They are personal to the DAIM user and set as part of the activation procedure by the user.
DAIM PIN: It will be used to validate AIM instances as a default AIM UVM. Each AIM instance is initialized with a unique PIN (which should be changed by the AIM User on activation).
DAIM UVM Key: It allows the DAIM user and designers to supplement PIN verification with another UVM such as biometrics. The DAIM is designed to support any comparative UVMs that require the matching of a dynamically captured data set against a reference value calculated during the initialisation process. The DAIM user must first authenticate to the DAIM via the PIN before he/she is allowed to set the DAIM UVM Key. The AIM UVM key will consist of the reference data needed to execute the UVM; this could be a finger print outline, facial map, etc

Consumer Controlled Attributes (CCA): They are owned by the service provider (consumer) who is integrating DAIM into their product or service solution and are not known to the user or the issuer.
Client Session Key - CSK: It will be loaded by those clients needing DAIM to manage a secure session with a remote host. The key shall be loaded using a protected command and with the protected data block encrypted using the DAIM unique key. AIM clients must authenticate the remote host sending the session key.
Device AIM Token Key - ATK: It key will be loaded by those clients needing AIM to perform tokenised payment functions. The token key is loaded using a protected command with the key being delivered in the protected data block under the AIM unique key. AIM clients must authenticate the host sending the token key.
General Purpose Keys - GPK: DAIM provides generic symmetric functions to enable session management. Consumers may load their own keys to DAIM under the protection of the AIM unique key using commands validated through the MAC for use in their own proprietary applications. These keys may be used in conjunction with the generic Encrypt, Decrypt, Sign and Hash functions support by DAIM.
Unpredictable Number: The unpredictable number is a 4 byte value that is sent in along with selected AIM commands and included in the integrity control block of an AIM response

### DAIM Capabilities:

Strong User Verification: The primary question on any remote decision makers mind is whether the person making a request is who they say they are (User Verification). Whilst the actual UVM is a matter of design choice any method employed by the DAIM designer benefits from the inherent security of the hosting environment and since the eSE or the TEEis secure even a rudimentary DAIM implementation requiring validation of a default personal identification number (PIN) can still be considered strong. Each DAIM application is equipped with a default UVM, namely PIN verification, but can be extended to use any comparative UVM by initialization of the UVM Key. Integrity Assurance: Both data and process integrity are managed by the DAIM resulting in the DAIM being able to guarantee the integrity of itself and responses to authentication requests that it provides. The DAIM is designed to use cryptographic algorithms to sign data responses. These digital signatures guarantee data integrity and the DAIM solution relies on Public Key Cryptography and the creation of a Public Key Infrastructure (PKI) to achieve this. The PKI results in two component parts that manage integrity for the DAIM.
Unique Key: Each DAIM is seeded with a unique asymmetric key (a type of cryptographic key that has a public and a private component) and that key is used to digitally sign all the authentication response data generated by the DAIM. This mechanism allows authentication requests from a client application to contain a data payload. The DAIM can sign that payload with its unique key returning not only the data signature but an indication of the user's authorisation status to the client application. To allow self-validation the DAIM provides a copy of its Public Key Certificate (PKC) to all clients allowing the client application or recipient of the response to validate the signature and determine whether that response has been tampered with.
Public Key Infrastructure: The issuer appoints a certification authority to provide an issuer PKC. The DAIM's PKC key is then signed using the MNOs certificate during device manufacture or DAIM provisioning. The chain of trust ensures that the recipient is able to first validate the issuer PKC. The issuer PKC can then be used to validate the DAIM PKC retrieved from the DAIM If all certificates are proven to be authentic then the recipient is free to validate the DAIM response signature by extracting the DAIM public key from its PKC. Successful validation DAIM signature confirms data integrity as well affirming the authenticity of the DAIM.
Security & Lockout Processes: In addition to the cryptographic security DAIM is responsible for policing its own security and lockout procedures. In very simple terms the DAIM would manage its own PIN/ UVM retry counters and these counters would be locked securely within the eSE or the TTE. As such if a retry counter is exceeded it cannot be reset by anyone other than then MNO.

### DAIM Operational Model:

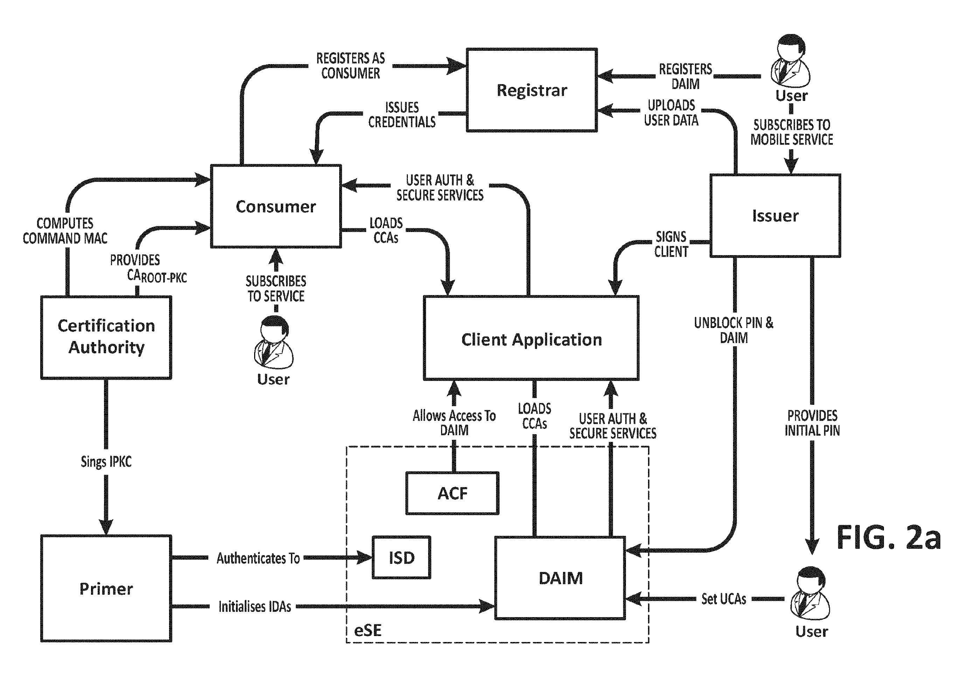

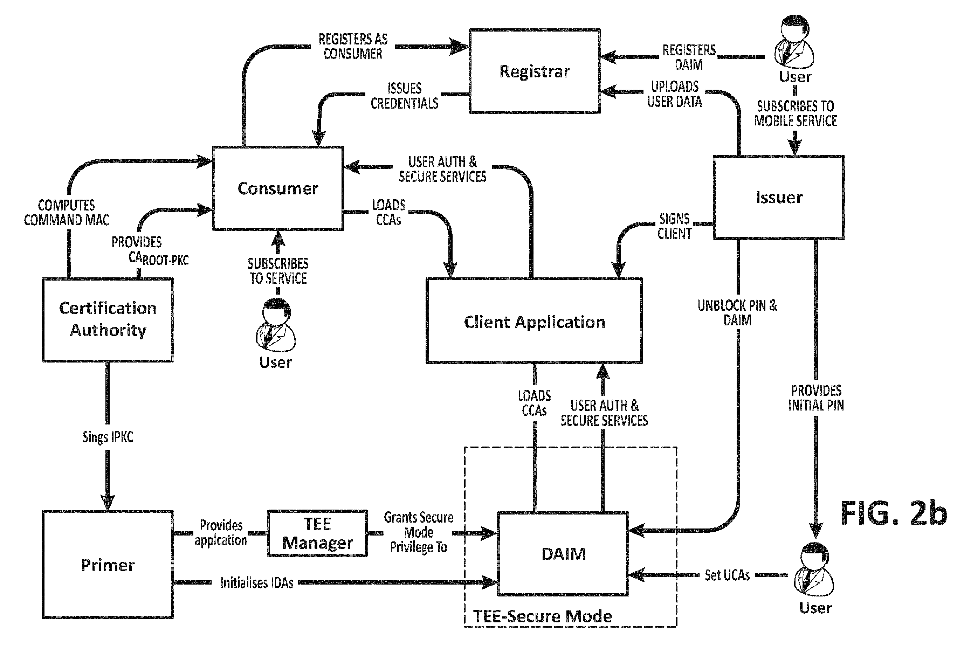

For a better comprehension of the DAIM operation, in figures 2a and 2b, it is shown some of the interactions between the different DAIM entities (functional elements) in the scenarios where the application is stored in an eSE and in a TEE respectively. In the following table, it is summarized the actions (functions) each entity requires for other entities and the actions (functions) each entity provides. This is only an example, not all the actions shown are mandatory in all embodiments of the invention.

| **Entity** | **Requires** | **Provides** |
|---|---|---|
| DAIM application | Primer to set Issuer Defined Attributes (IDAs) | Authentication services to the AEC Secure services to the AEC including |
| | Primer to authenticate to ISD | • Generic DAIM services |
| | Consumer to set CCA | • Payment / Application specific services |
| | User to Set PIN and/or UVM KEY | |
| | User to Authenticate to it | |
| | Consumer to bind service | |
| AEC (DAIM enabled client application) | DAIM application to authenticate user | Delivers service to user |
| | DAIM application to provide generic and application specific secure services | Binds protected service with DAIM |
| | Issuer to sign | User interface for authentication commands |
| | ACF to permit access to DAIM | |
| | Consumer to deliver service to user | |
| | Consumer to bind protected service to DAIM | |
| | Issuer to sign and approve it | |
| ACF (Access Control File) | Knowledge of Issuer signing key | AEC's access to DAIM |
| ISD (Issuer Security Domain) | Shared domain keys | Primer ability to load and provision DAIM on eSE or TEE |
| Registrar | User to register their identities | Credentials to Consumer |
| | Consumers to register | Identity Data to Registered Consumers |
| | Subscriber data from the Issuer Consumer Relationship Management (CRM) | |
| | Relationship with issuer | |
| Issuer | A business relationship with the User | Mobile subscription to users |
| | A business relationship with a Primer | DAIM application |
| | An Application Signing Key | eSE or TEE (Mobile Device) |
| | Ownership of the ISD keys | Application approval services to Consumers |
| | | User data to registrars |
| Consumer | A business relationship with the user | Service to user via AEC |
| | The CA to MAC commands | CCA's to DAIM AEC |
| | The CA Root certificate | |
| | Consumer Credentials from registrar DAIM to secure protected service | |
| | Issuer to sign/ approve AEC | |
| Certification Authority | CA root certificate | CA root certificate for DAIM response validation |
| | Relationship with issuer | |
| | Consumer credentials from registered consumers | Issuer public key certificate MAC computation services. |
| Primer | Relationship with Issuer | Secure loading and provisioning services to DAIM |
| | Knowledge of ISD key | |
| | CA to sign Issuer Keys | |
| TEE Manager | DAIM application for inspection and validation | Grants secure mode privileges to AIM application |

### Other interesting DAIM aspects:

Confidentiality via the Unique Key: Since the DAIM is seeded with a unique asymmetric key pair; it is possible for the DAIM to receive confidential data from external entities. The DAIM achieves this by freely sharing its own PKC. The PKC, as well as being able to validate data signatures, can be used to encipher data in a way that only the DAIM can decipher. This technique ensures that the DAIM can receive data from remote parties in a secure manner without the need to establish a shared secret.

External Key Load & Storage under a Unique Key: DAIM employs the principle of a self-generated localised master key to protected local data in a way that is independent of the devices capabilities. This allows these devices to run secure services even if they don't have any native support for cryptographic functions. The local master key (LMK) never leaves the DAIM (its host eSE or TEE) and it is unknown to all external entities since it is self-generated by the DAIM on activation. DAIM encrypts data under this key and stores it outside of the eSE or TEE without risk of compromise. If the data is of a sensitive nature application providers can use this feature in conjunction with the DAIM unique key to provide end-to-security for the data on route to their application as well having on going protection for that data once stored in their application.

Protected Commands and the MAC: DAIM is designed to hold and protect data, however to prevent unauthorised access to specific commands, DAIM employs the technique for protected commands. Protected commands do not specifically indicate that the data in a command is sensitive. Protected commands are those that can be issued by an authorised entity. AIM uses the concept of a message authentication code (MAC) that is attached to the command and allows the DAIM to identify the origin of the command and whether the person sending the command is authorised to do so.

External Key Load with the Authority of the Certification Authority (CA): DAIM uses the message authentication code or MAC to control the usage of sensitive commands. DAIM uses the MAC key in conjunction with the CA to ensure that only authorised or approved entities can load keys to the application. This coupled with the confidentiality provided by the unique key ensures that only the AIM consumer and AIM know the value of the third party keys.

Session & Session Key Management: With the ability to securely load and use external keys DAIM is able to manage secure channels for its client application. Using the ability to securely receive a key from a remote host, DAIM can use that key as Master Derivation Key (MDK) and combine it with agreed session data to generate session keys (short lived symmetric cryptographic keys). The sessions may then be used to encrypt data traffic between the client application and its remote host, sign messages from the client application to the remote host and validate commands sent from the remote host to the client application. Optionally, the DAIM can ensure that client side secure sessions are only initiated by an authorized user through execution of the UVM

General Cryptographic Functions: DAIM provides generic security functions to both the user and consumer. These functions may be for example, data encryption, decryption, signature or hash generation, for any client application whose owner has loaded a general purpose key to DAIM. Payment Token Management: To facilitate tokenized payment applications DAIM support specific keys and functionality. For token generation, DAIM is designed to support localized token generation services for any payment application that use tokens in the conduct of payments. DAIM may support two integration methods for token generation algorithms: Fully Integrated Algorithm (has been hardcoded into the DAIM application code) and Extension Algorithm (external algorithms that are integrated into DAIM over a shareable interface and hosted within the eSE or TEE as an independent application). DAIM can also secure payment tokens using its own internal master key and in a manner that requires the users to authenticate themselves before the token is released for use. Payment scheme specific algorithms or processing flows may be integrated into DAIM using similar techniques as the used for Payment Token Management.

Self-Validating Response Messages: DAIM commands may be based for example on standardized ISO 7816 Application Protocol Data Units (APDU) with proprietary class designations as required. DAIM commands are designed to elicit an appropriate DAIM response and the operational commands are designed to allow DAIM clients to send proprietary data to the DAIM for processing and digital signature. The DAIM Authentication command and others, that return a digital signature in the response, are unique in their ability to allow a remote host to self-validate the response without recourse to the issuer.

In the command message, subject to the command type, the Command Payload can contain both protected data (encrypted under a key known to DAIM, using for example either the DAIM unique key, DAIM Local Key or a consumer loaded key) and unprotected data (not encrypted). The Control Authority Block (CAB) encodes the command message authentication code which is generated by DAIM CA and calculated by concatenating the Command Block and the Command Payload and applying the selected generation algorithm using the DAIM MAC key.

The response includes the DAIM Processing Outcome Block (POB) which is key the integrity assurance provided by a DAIM instance. It contains the result of processing the requested command with the protected response data (data that has been processed as part of the command operation and encrypted with the DAIM unique key, DAIM Local Key or a consumer loaded key), unprotected response data (data that has been processed as part of the command operation and returned in the clear by the DAIM) and the DAIM Signature. The DAIM signature is returned in the Integrity Check Block (ICB) and used to provide remote entities with the assurance required to establish the integrity of the DAIM response. The DAIM signature can be used by DAIM consumers to validate the integrity of the responses from a DAIM instance. The signature is calculated by the application of an appropriate signing algorithm to a concatenation of the POB, RPB and the AUS. The signature is generated with the DAIM unique key. The DAIM signature ensures that a relying party can trust the authentication status of the DAIM user as returned in the POB as well as being assured that data has not been tampered with. The POB also includes the Replay Check Block (RCB), which encodes a value that ensure uniqueness of the DAIM signature and guarantees that the signature will not be the same for two identical commands irrespective of the value of the POB and AUS; the DAIM and User Status (AUS), which is the outcome of processing the command. The AUS also returns the user's authentication status in scenarios where the command was required to process a selected authentication algorithm.

### DAIM Usage Modes:

DAIM is designed to be used in a number of distinct modes, depending on the degree of information or assurance required by the Consumer. Each mode offers a greater degree of assurance in terms of the processes used to validate a DAIM user's identity and the information available to the issuer.

Anonymous User: In this mode, no specific steps are taken by the MNO to validate the identity of a user. Any mobile subscriber, even those holding pre-paid or linked accounts, may apply for activation of their DAIM as long as they can prove they are in control of the device that is being activated.

Non-Validated User: It covers all scenarios where the identity of the user is validated against the details being held by the MNO alone. As such this type of usage will automatically be available to all post-paid account holders and can be made available to pre-paid, linked or corporate account users if the user is willing to register their details with the issuing MNO. Validation is performed by the DAIM Registration Authority against the MNO's Customer Relationship Management (CRM) database. In other words, the user identity has been confirmed against the issuer own CRM data during registration. In some instances the data in the CRM will have been externally validated through indirect methods such as direct debits or registration processes that demand the presentation of physical proofs of identity at the MNO's retail premises.

Validated User: It offers the highest level of assurance. Recipients of a validated mode response can be assured that the registration authority (DAIM issuer) has carried during registration of the user, external KYC (Know Your Customer) checks on the identity of the DAIM User, which are run against independent data sources such as the electoral role or credit reference agencies. As a value added service validated usage can support additional real-time validation beyond that contained within the DAIM response, such as identity attribute checks, through the DAIM Registrar.

### DAIM Reliability:

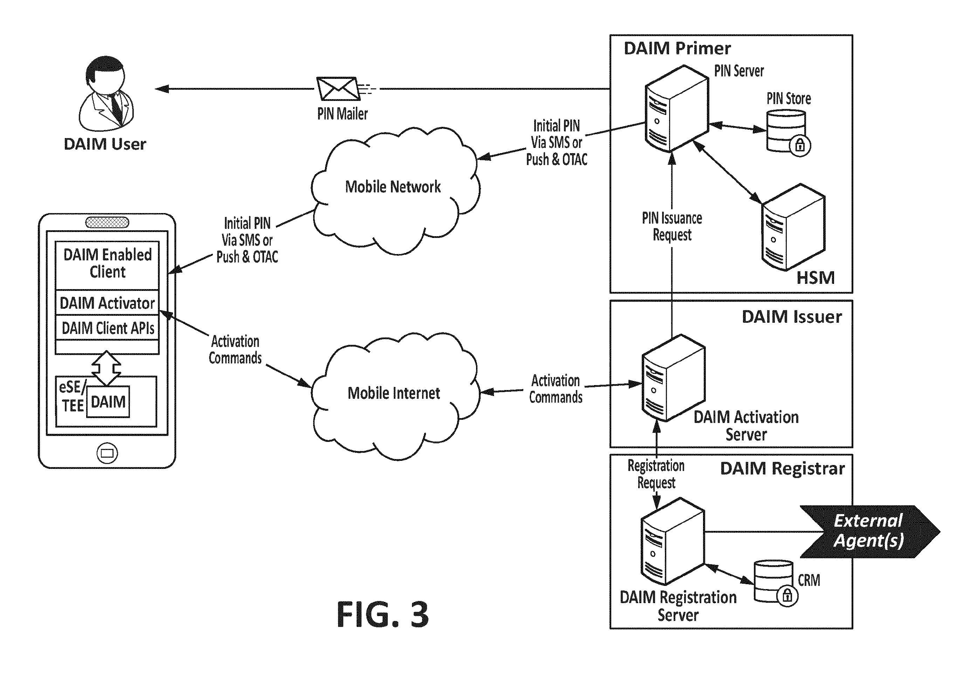

The reliability of the proposed solution (DAIM) is based in some aspects/features derived from existing established criteria. Some of these features are:
Secure Production & Initialization Processes: DAIM is designed to be installed as part of the mobile device manufacturing process or using a secure over the air delivery. DAIM solution thus insists that all set-up and provisioning of the DAIM application is done within a safe controlled environment with all sensitive data being kept encrypted at all times. This disclosure proposes that the DAIM be included in the standard operator specification for all devices that support an eSE or TEE. Using this approach the DAIM can be loaded securely during device procurement and devices arrive onto the market ready to participate in the DAIM ecosystem.
Robust Activation & Registration Procedures: DAIM solution supports a robust activation process with the added security of being able to register a user's details through a Registration authority who is capable of validating those details if required. All DAIM activation processes ensure that the individual requesting activation is in control of the device within which the DAIM is being activated. The DAIM activation processes thus ensure that the AIM PIN and UVM key are loaded by the individual in control of the device and where necessary can validate the identity of that person allowing consumers to trust AIM responses in both anonymous and registered scenarios. Tamperproof Hosting Environment: DAIM takes advantage of several environmental features available within today's devices to ensure security and maintain trust. These mechanisms extend the security already available through hosting the AIM within an eSE or TEE and controlling access to it via hardware based mechanisms.
Better than SIM Based Security: Since DAIM is hosted within the eSE or compiled to run under a TEE benefits from all the security afforded by a device or mechanism of this nature. Key to the usage of the eSE is acceptance of its capabilities by payment schemes and MNOs alike in terms of providing the necessary levels of security to protect their secrets. In addition to these, operating systems such as GlobalPlatform not only ensure physical and logical security of the DAIM and its data but also provide secure protocols that can control which clients are allowed to access the applications they host. Thus using the Access Control File (ACF) or Access Rule Application (ARA) protocols designed to secure wallet communications with NFC payment applications the DAIM host can effectively police which client applications can communicate with DAIM. TEE installations ensure that under secure mode only trusted applications are active. This mechanism results in an assurance that malicious software cannot tamper with DAIM or steal the secrets it holds. Processor design also means that physical access to device memory used in secure mode within a TEE is restricted to trusted applications only. When operating under normal mode secure mode memory is disabled by hardware mechanism making it impossible to reach
The DAIM Certification Authority: It is tasked with creating and maintaining the chain of trust needed to allow consumers to trust the response from a DAIM and the safety of their assets. To this end the CA ensures that: All unique AIM PKCs are signed with the IPKC signed which is in turn signed with the AIM CA root. The CA's root PKC is available to all AIM consumers as is common practice in well-established PKIs and that all sensitive commands are authorised through the application of a command MAC. As such consumers are safe in the knowledge that other trusted user can load keys to the DAIM and that it will keep these separate.
No User specific data: DAIM is designed not to hold any data relating to its user. The data stored within the DAIM and its attributes are designed to identify the DAIM and ensure its uniqueness and allow the execution of secure functions. So, there is no risk of any user data being compromised. DAIM relies on its issuer to store the details of the owner safely in the cloud. If DAIM user's data is required, the consumer can retrieve that data from the issuer or the data that the consumer providing the service gathered during the service subscription. DAIM requires that the service provider, i.e. the consumer, hold and association between the DAIM ID and the protected service or account.
Two Factor Authentication: Since DAIM requires the user to be in possession of the mobile device with an DAIM application installed and knowledge of the DAIM UVM key (e.g. the PIN) to be authenticated; DAIM satisfies the established criteria for two factor authentication.
Immunity to Single Key Compromise: The fact that each AIM is seeded with a unique key results in immunity from "single key compromise". Schemes based on a single key suffer from varying degrees of exposure in situations where a key is compromised; the higher up the derivation hierarchy that a key sits, the greater the impact if that key were compromised. Since the unique AIM key is specific to a single DAIM instance (application), if that instance were compromised, then only the compromised DAIM would be impacted.
Controlled Access: Access to DAIM application is controlled through existing mechanisms provided by the device manufacturers (Access Control File (ACF) or Access Rules Application (ARA) in conjunction with the issuer signing key), to ensure that only approved client applications (no rogue applications) can be access DAIM capabilities.
Issuance and Lifecycle Management: DAIM is can operate in a standalone manner for the majority of its lifetime with little or no input from the issuing MNO. DAIM does however require a lightweight infrastructure, leveraging some existing processes, complimented with new processes to issue DAIM and manage the AIM lifecycle. The processes necessary to issue and manage DAIM are described below.
Manufacture: DAIM is designed to be an addition to the device profiles of the MNO. Each MNO has agreements with device manufactures to deliver proprietary device configurations based on the manufacturer's base product. The MNO is free to make DAIM part of their device configuration and request that the device manufacturer load the application to all mobile devices (handset) shipped to them. The device manufacturer will be responsible for installing the files necessary to create a working DAIM instance onto a device before it is shipped. The mobile operator, in conjunction with a DAIM Primer, will provision the DAIM instance once a user decides to activate it.
Issuance: Device AIM applications can be issued through two channels. Device retailing process, where the device based AIM is pre-installed on all new devices, or over the air (OTA). In cases where a user is already in possession of a device that supports an eSE, DAIM can be issued through a streamlined OTA process, in which the operator will have the ability to load the DAIM application to the device. OTA DAIM issuance can be achieved by the Primer, Issuer and CA using a localised loading agent that is distributed alongside a DAIM client. The OTA provisioning mechanism described is reliant on the DAIM being located under a security domain (SD) belonging to the mobile operator and based on the principle that once the DAIM has been loaded to and instantiated on the eSE the only personalisation required is the initialisation of the DAIM Keys, Initial PIN and DAIM ID. With these principles in mind OTA distribution can be achieved by embedding the personalisation script into the DAIM Loader, with the loader calling out to the Primer to: Create the SCP02 channel to the eSE and prepare the encrypted commands needed to initialise the AIM keys, PIN and AIM ID. The process above removes the need for a TSM and protects the SD keys by never allowing the SD keys to leave the secure confines of the Primer's HSM (Hardware Security Module). In addition to this, since the DAIM is hosted under the ISD, the issues associated with content management modes are moot and GlobalPlatform Amendments needed to support NFC SIM (or device) payments applications unnecessary.
Retrofit to TEE: Retrofitting a DAIM application to the TEE follows existing mobile application deployment paths. DAIM producers would develop and deliver the application to the TEE manager. The TEE manager after vetting the application for compliance with the TEE rules would grant secure mode privilege to the application and post it on the relevant application store. Users would download the application using existing download procedures
Activation: Users would request activation of their DAIM through the DAIM issuer. The activation request would trigger related processes but most importantly the DAIM Issuer would ask the DAIM, primer or holder of the initial PIN to send that information to the user (e.g via PIN mailer or SMS). The user will have to validate its identity, using the received PIN, via an MNO specific process depending on the usage mode (the activation process would differ for each usage mode, but the environment required would be the same). Finally the activation could be achieved through a dial up customer support dial process or through the use of an Activator functional element embedded into the DAIM client. Figure 3 shows the infrastructure needed to support activation.
Revocation: In the event of a DAIM going missing (host device being lost / stolen) or a DAIM PIN being compromised, the Issuer will manage a revocation process, providing a hotlist of compromised DAIM IDs and revoked PKCs to all consumers, using DAIM in a registered state.

### DAIM use cases.

DAIM supports numerous use cases in different embodiments of the invention; these use cases can and do support differing scenarios. Some DAIM use cases are going to be listed and explained as examples (the present invention is not limited to these use cases). Due to the independent nature of DAIM it can be applied to any application that requires the management of data integrity, confidentiality and user authentication on a device (e.g. a mobile device). In addition to mobile use DAIM, if required, can be used within fixed web scenarios through the exposure of the web services supported by the MNO DAIM service APIs. DAIM is thus applicable to financial services, Identity management and Access control (of course, it can be used in other areas). DAIM is a component application that "compliments" and "enhances" the fundamental uses cases.

### Service Binding:

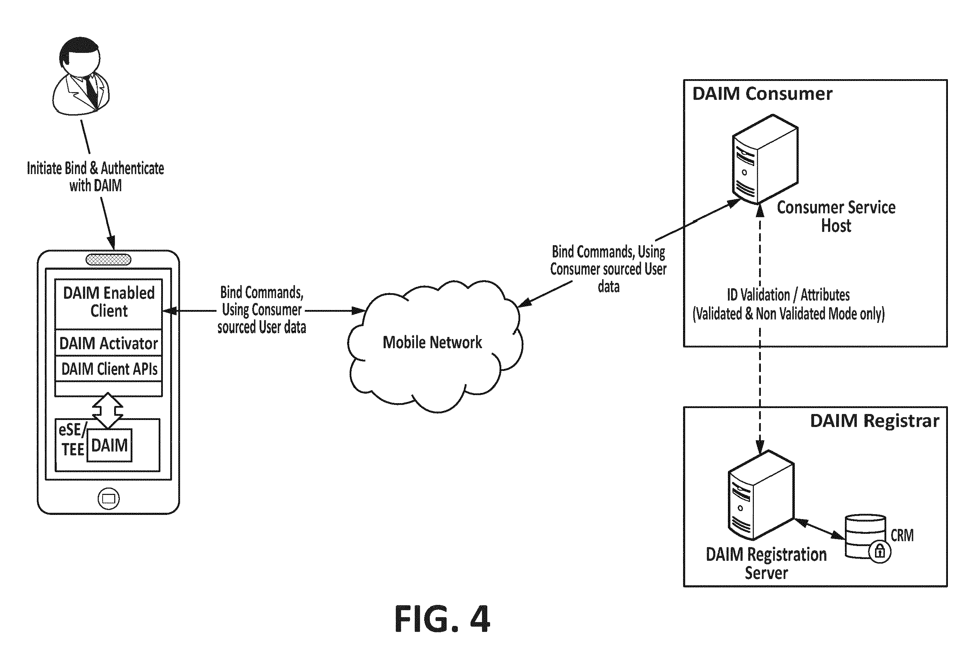

DAIM is designed to allow an external application or service provider (consumer) to delegate user authentication and transactional integrity management to DAIM (ascertain the authenticity of a remote subscriber and ensure integrity of the instructions form that subscriber). In order to allow said delegation, the Consumer must be approved or registered with the registrar and include the DAIM SDK into their mobile service client (such that the DAIM user can employ DAIM as their chosen authentication mechanism to any service). Those consumers wanting to validate user details with the issuer during the binding must be registered. Binding is a consumer driven activity. The only mandatory requirement is that the consumer process authenticates the user via AIM during the service bind. Figure 4 describes the infrastructure needed to support Service Binding. Anonymous Mode Service Binding: Under this mode, a registered DAIM Consumer can bind any service to a DAIM instance (application). The DAIM consumer is responsible for performing their own Know Your Customer (KYC) processes on their subscriber and can use their knowledge of the subscriber to complete the binding operation and validate the subscriber's identity. In the following table a list of the necessary steps for service binding in anonymous mode is provided (it is assumed that the consumer has a mechanism for authenticating the user and that the user data requested will be name, etc. along with a secret security word):

| |
|---|
| DAIM user requests binding on DAIM enabled service to his/her DAIM |
| DAIM user's request is sent to Consumer Service Host |
| Consumer service host validates message from client applications and selects user verification data to be requested from internally known data. |
| User validation data request is returned to client application |
| DAIM user is asked to enter data requested by consumer host |
| DAIM user enters or confirms requested data |
| User is prompted to enter DAIM PIN |
| User Enters DAIM PIN |
| DAIM enabled client prepares VERIFY PIN command data |
| VERIFY PIN command with user entered data and DAIM PIN sent to DAIM |
| DAIM Verifies PIN and sets authentication status in AVR |
| User Data block from verify command, DAIM ID and AVR signed with AUK |
| Signed data including DAIM ID and AVR returned to client application |
| Client application downloads DAIM PKC and IPKC from DAIM |
| DAIM PKC and IPKC from DAIM returned to client |
| Client application builds proprietary bind command with DAIM data |
| Bind request sent to consumer host |
| Consumer host validates DAIM PKC |
| Consumer host validates DAIM signature |
| Consumer host validates AVR - Authentication states |
| Consumer host validates user data returned in bind request with internal CRM |
| If user data matches and DAIM authentication status matches then consumer host binds DAIM ID to service |
| Outcome of bind request returned to client application. |

In the Validated/ Non Validated Mode Bind, the registered consumers can bind their service to DAIM and delegate security. In doing so their registered status allows them to supplement user validation with the user data attributes collected during the user registration or mobile subscription process. In the following table a list of the necessary steps for service binding in Validated/ Non Validated Mode (V/NV) is provided:

| |
|---|
| DAIM user requests binding on DAIM enabled service to his/her DAIM |
| DAIM user's request is sent to Consumer Service Host |
| Consumer service host validates message from client |
| Consumer host request user attributes list from DAIM Registrar |
| DAIM registrar returns DAIM user attributes list |
| Consumer host selects user validation data from internal information and DAIM attributes list |
| User validation data request is returned to client application |
| DAIM user is asked to enter data requested by consumer host |
| DAIM user enters or confirms requested data |
| User is prompted to enter DAIM PIN |
| User Enters DAIM PIN |
| DAIM enabled client prepares VERIFY PIN command data |
| VERIFY PIN command with user entered data and DAIM PIN sent to DAIM |
| DAIM Verifies PIN and sets authentication result in AVR |
| User Data block from verify command, DAIM ID and AVR signed with AUK |
| Signed data including DAIM ID and AVR returned to client application |
| Client application downloads DAIM PKC and IPKC from DAIM |
| DAIM PKC and IPKC from DAIM retuned to client |
| Client applications builds proprietary bind command with DAIM data |
| Bind request sent to consumer host |
| Consumer host validates DAIM PKC |
| Consumer host validates DAIM signature |
| Consumer host validates AVR - Authentication states |
| Consumer host validates user data returned in bind request with internal CRM |
| Consumer host request validation of DAIM user attributes |
| DAIM registration server validates DAIM User attributes |
| Validate user attributes result returned to consumer host |
| If user data matches, DAIM authentication status is true and DAIM attributes confirmed then consumer host binds DAIM ID to service |
| Outcome of bind request returned to client application. |

**Stand Alone Use:** Whilst DAIM is designed for use within a wider ecosystem certain functions with DAIM can be used in a standalone capacity. Standalone operation gives a consumer access to at least the following set of limited capabilities:
1. User Authentication
2. Receipt of secure information under the DAIM unique key
3. Secure localized storage of data under the DAIM local master key.

Consumers wanting to employ DAIM in a standalone capacity must: Ensure their client application is approved and signed by the issuer and that they obtain the CA root certification from the DAIM CA.

### Registering for DAIM:

Each DAIM usage mode will require an appropriate registration/activation sequence with the registration being upgradeable from Anonymous use to Validated. Since DAIM is shipped in an active state the act of registration and the receipt of the initial DAIM PIN is synonymous with activation and the registration process serves as activate DAIM. DAIM activation is triggered through a DAIM client component referred to as the DAIM activator. For the purposes of simplicity only the client application pull registration path will be described at this stage. The infrastructure required, according to an embodiment of the invention, to activate DAIM through a client pull is shown in Figure 3.

Anonymous mode usage is defined as DAIM utilization without any validation of the DAIM user's identity. The MNO confirms the MSISDN and device on which the DAIM is activated and underwrites the activation process. Following activation the DAIM can assert the authenticity of the person who enters the initial PIN or who used the initial PIN to set a new value. DAIM consumers delegating services to a DAIM operating in anonymous mode are responsible for validating the user. The DAIM Issuer will ensure that the DAIM is reachable through the phone number associated with that DAIM through the relationship between the International Mobile Subscriber Identity (IMSI), the DAIM ID and phone number. According to an embodiment, the steps performed for Anonymous mode Activation (registration) are indicated in the following table:

| |
|---|
| DAIM user requests anonymous mode activation through his/her DAIM enabled client |
| DAIM requests activation data from DAIM application using ACTIVATE Command |
| DAIM generates activation request |
| Activation Number, PKC, DAIM ID and IMSI returned by DAIM (application) |
| DAIM Activator builds activation request |
| Request for activation key sent to DAIM activation server by DAIM activator |
| Activation server validates DAIM PKC then generates and encrypts activation key with DAIM PKC, and prepares SET KEY command |
| Activation server requests computation of protected command MAC from DAIM CA |
| DAIM CA computes command MAC |
| MAC SET KEY command with encrypted activation key returned by CA |
| Activation script containing MAC SET KEY command returned to DAIM activator |
| DAIM activator executes SET KEY command |
| DAIM validates command MAC and installs activation key |
| Activation number returned by DAIM |
| DAIM activator prepares request for activation code, with DAIM ID, IMSI and Activation Number |
| DAIM request anonymous activation code |
| Activation server validates request |
| Activation server generates Activation code using Activation key and Activation Number |
| Activation server fetches MSISDN for DAIM ID / IMSI |
| Activation server sends activation code to recovered IMSI over SMS channel |
| Activation code is displayed to user on mobile device |
| Activation server requests initial PIN to be sent to recovered MSISDN |
| User enters Activation code into DAIM Activator |
| Activator sends Activation command and activation code to DAIM |
| DAIM validates activation code using activation key, activation number |
| On successful validation of activation code DAIM activates in Anonymous mode |
| DAIM primer extracts initial PIN from PIN database |
| DAIM Primer send Initial PIN via SMS to MSISDN supplied by activation server |
| User request PIN rotation |
| DAIM activator sends SET PIN command with new and old PIN |
| If initial PIN matches old PIN, new PIN is set. |

Non-Validated Usage occurs when the details of a DAIM user are bound to that user during registration. As well as validating control of the device the MNO checks information provided by the user against that held by the MNO in their internal Customer Relationship Management (CRM) database.

Validated mode is achieved when the DAIM user's identity is validated by the MNO against official external data sources. Validated mode can be used by a DAIM consumer to supplement or replace their own KYC process.

According to an embodiment, the steps performed for Non-Validated and Validated mode Activation (registration) are indicated in the following table:

| |
|---|
| DAIM user requests Non-Validated/Validated mode activation through his/her DAIM enabled client |
| DAIM requests activation data from DAIM using ACTIVATE Command |
| DAIM generates activation request |
| Activation Number, PKC, DAIM ID and IMSI returned by DAIM |
| DAIM Activator builds activation request |
| Request for activation key sent to DAIM activations server by DAIM activator |
| Activation server validates DAIM PKC then generates and encrypts activation key with DAIM PKC, and prepares SET KEY command |
| Activation server requests computation of protected command MAC from DAIM CA |
| DAIM CA computes command MAC |
| MAC SET KEY command with encrypted activation key returned by CA |
| Activation script containing MACed SET KEY command returned to DAIM activator |
| DAIM activator executes SET KEY command |
| DAIM validated command MAC and installs activation key |
| Activation number returned by DAIM |
| DAIM activator asks DAIM user to enter personal details mandated by MNO. |
| Registrant enters requested details into client application. |
| DAIM activator extracts IMSI, DAIM ID and registration number then combines these with requested user details to build registration request. |
| Non-validated/Validated mode registration request is sent to DAIM Activation server by DAIM Activator. |
| DAIM Activation server validates registration request and checks DAIM ID and IMSI. |
| DAIM Activation server requests validation of user details from DAIM Registration server. |
| DAIM Registration server validates user details against MNO's internal CRM database (in the validated mode, an External KYC process is also executed and results are combined with the internal validation) |
| Validation result returned to activation server |
| Activation server generates activation code using Activation number and Activation key |
| Activation server caches user data and activation code in temporary database |
| DAIM Activation server fetches MSISDN linked to IMSI from MNO data. |
| Activation code sent to device using SMS to recovered MSISDN |
| Activation code display to user |
| DAIM user enters activation code into his/her DAIM client |
| DAIM activator requests activation with activation code. |
| DAIM validates activation code using activation number and activation key |
| DAIM Activates in non-validated/validated mode |
| DAIM response returned indicating activation in non-validated mode + signed bind request |
| Activator requests registration and bind of user |
| Activation server validates bind request |
| Activation servers requests bind of user details to DAIM ID |
| Registration server binds DAIM ID to user details and commits to database |
| Registration server confirms registration success. Note if registration is unsuccessful PIN will not be issued and registration will fail. |
| Activation server calculates Bind Code using Activation Key and Activation Code |
| If registration is successful activation server request issuance of initial PIN to DAIM user. |
| Registration confirmation and Bind code sent to DAIM activator |
| Bind code sent to DAIM |
| DAIM validates Bind code using activation code and activation key |
| DAIM set PIN flag to rotate allowing PIN to be set by user |
| Registration confirmed by DAIM Activator |
| Registration outcome displayed to user |
| DAIM Primer locates initial PIN based on DAIM ID sent in issuance request. |
| DAIM Primer sends initial PIN to DAIM User (DAIM user must rotate PIN). |

### DAIM Authenticated Cloud Based Account Debit

To describe the use case in principle an example from the transit application area will be used. Using DAIM, transport, providers and users alike will be able to join in the creation of a singular service that can debit funds from an online account or charge daily usage to a source of funds at the end of the day. This use case assumes that both DAIM user and DAIM consumer are registered and that the DAIM User has bound his/her DAIM to the service being provided by the transit operator. The use case also assumes that the DAIM user has a cloud account with the transit operator and that the transit operator has undertaken the necessary tasks to validate the source of funds that underpin the account. With these preconditions fulfilled the DAIM user can present their device at the transit gate and DAIM powered transit client can provide an authenticated instruction to the transit operator. The transit operator in turn can collect all the entry exit taps under taken by the DAIM user through the day and calculate the most cost effective fare to the DAIM user. The transit operator can then debit this amount from the DAIM user's cloud account or registered source of funds. The steps taken in this use case are explained in the following table.

| |
|---|
| Registered DAIM user enters his DAIM PIN and presents his device with DAIM enabled transit application to the entry gate. |
| Transit gate obtains DAIM ID, Authentication state, DAIM Signature and PKC from DAIM using NFC transaction. |
| Entry gate checks DAIM ID against local deny list and validates authentication state. |
| If DAIM ID not on local hotlist and authentication state positive DAIM ID, DAIM Signature and DAIM PKC sent to transit authority along with entry notification via real-time or batched process. |
| If DAIM ID not on deny list DAIM User is allowed to start journey. |
| Registered DAIM user presents his device with DAIM enabled transit application to exit gate. |
| Transit gate obtains DAIM ID, DAIM Signature and PKC from DAIM using NFC transaction. |
| Transit Gate sends DAIM ID, DAIM and DAIM PKC along with exit notification to transit authority via real-time or batched process. |
| Transit authority analyses daily activity and calculates optimum fare for daily activity based on DAIM ID. |
| Transit authority debits account linked to DAIM Users DAIM ID. |
| Alternatively the transit authority debits the DAIM Users card on file. |

### DAIM Powered Secure Logon / Single Sign On

A more generic application of the DAIM would be in support of generic logon use cases and single sign on. The use case relies on the DAIM signature and authentication status contained within the DAIM response to allow a remote server to validate the authenticity of a user. Furthermore the DAIM ID could, if required, be used as an alternate user ID. The steps taken according to an embodiment of the invention are explained in the following table:

| |
|---|
| Registered DAIM user launches his DAIM enabled logon client in the mobile device. |
| User is prompted to enter his DAIM PIN. |
| The DAIM authenticates the users PIN and prepares a response message for the remote server containing an DAIM signature, user authentication status and DAIM PKC. |
| The DAIM response is sent to the remote server (DAIM enabled webserver) for example, via internet. |
| The remote server validates the integrity of the message using the DAIM PKC and checks the user's authentication status. |
| Upon successful validation of the DAIM response and receipt of a positive user authentication status the remote server grants access to the DAIM user. |

### DAIM Powered Magnetic Data Point of Sale (mPOS)

Mobile point of sales can also be conducted under the protection of DAIM using DAIM enabled applications. Mobile handsets not supporting a Trusted Execution Environment (TEE) currently suffer from vulnerabilities with respect to the authentication of users. In addition to this all mobile Point of Sale (POS) solutions that attempt to use the handset suffer from the need to have a card interface unit attached in order to read a card through the contact interface. DAIM can simplify the mobile POS to the point where transactions could effectively be conducted over the contactless using magnetic card data but with strong user authentication, as described in this use case. The steps taken, according to an embodiment of the invention, in this use case are explained in the following table. Part of card set-up magnetic stripe details of the card would need to be captured by the DAIM wallet, this use case description assumes that this has been done and that the track 2 data needed for the transaction is in the DAIM powered wallet and secured by DAIM using the DAIM unique key.

| |
|---|
| DAIM enabled wallet has been loaded with targets card's Track 2 magnetic data. Card details protected using DAIM Unique key |
| Merchant enters transaction into DAIM enabled mPOS. |
| DAIM User enters his DAIM PIN and present device to mPOS. |
| mPOS uploads its own DAIM PKC to user wallet (e.g. over NFC interface). |
| User DAIM validates user's authentication status and translates locally stored track 2 data to mPOS DAIM PKC and prepares response with user authentication status to mPOS. |
| Wallet application returns DAIM response and track 2 data to mPOS application (this step could be performed as standard EMV mag-stripe over contactless interface with DAIM encryption or through proprietary transaction). |
| mPOS DAIM validates user authenticity and decrypts track 2 data using its DAIM unique key |
| mPOS sends approval request to DAIM enabled switch, if user authentication positive. |
| DAIM enabled switch performs optional validation of DAIM user authentication status and/or decryption of card data |
| DAIM enabled switch posts transaction approval request to issuer via payment network |
| Card issuer posts approval decision on payment network. |
| DAIM enabled switch returns issuer response to mPOS. |

Summarizing, the present invention proposes a technique for managing authentication, integrity and confidentiality of users transactions. DAIM could be applied to any product/service which requires user authentication, preventing data tampering and protecting confidential data. DAIM will be therefore very useful in many different areas, as for example, Identity services, Wallet Services, Access services, Online Payment, POS payments.

DAIM provides to the involved parties, between others, the following advantages:
DAIM provides application developers with strong two factor authentication off or online.
DAIM can be used as the authentication method in a payment transaction, to request a card token form a tokenization service provider, a user credit/debit card transaction, a card no present transaction, an access control transaction... or any other type of transaction.
DAIM signs the result of any transaction
DAIM makes transactional data tamperproof and undeniable
DAIM is linked to a mobile subscribers account and identity
DAIM is versatile and can be extended to incorporate biometrics
DAIM is simple and requires no costly issuance and lifecycle management processes
DAIM is built on technologies understood by payment industry and mobile operator alike -
EMV & GSMA/3G/4G
DAIM can be applied to many Use Cases
DAIM requires no costly SIMs and, generally speaking is cheap.

Even though many of the presented embodiments are referred to mobile communications networks, the present invention is not limited to mobile communications network but it can be applied to other communications network.

The description and drawings merely illustrate the principles of the invention. Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. Method for providing an authentication, integrity and confidentially service for transactions performed between an user of a first mobile device and a provider of user services through a mobile communications network, the method comprising the following steps:
a) Receiving from the user by the first mobile device, at least a transaction request for the provider of user services;
b) For each transaction request received:
b1) A first application of the first mobile device, verifying user identity for the authentication, integrity and confidentially service, where the first application has been previously loaded in an embedded Secure Element, eSE, of the first mobile device or in a Trusted Execution Environment, TEE, of the first mobile device;
b2) If the user identity verification is successful, the first application preparing, at least one message to be sent to the provider of user services including transaction information and for each message prepared related to each transaction, the first application calculating a signature for each message using an unique asymmetric key and including said signature in the message;
b3) the first mobile device, sending the at least one prepared message to a server of the provider of user services through the mobile communications network.

2. A method according to any of the previous claims where the step of verifying user identity comprises the following steps:
- Prompting the user to enter an user personal identification number, PIN, for the authentication, integrity and confidentially service, associated to the user of the first mobile device;
- Receiving the user personal identification number;
- The first application validating the user personal identification number.

3. A method according to claim 2 where the user personal identification number has been generated by a mobile operator of the mobile communications network and provided to the user and to the first mobile device during the user registration in the authentication, integrity and confidentiality service.

4. A method according to claim 2 where the user personal identification number is set by the user during the user registration in the authentication, integrity and confidentiality service, by changing an initial personal identification number generated by a mobile operator of the mobile communications network.

5. A method according to claim 1 where the verification of user identity is performed using biometric identification of the user.

6. A method according to any of the previous claims, where the method further includes:
- For each message related to the transaction received by the server of the provider of user services, from the first mobile device, checking the integrity of the message by validating the signature using the public part of the unique asymmetric key and, if the validation is not successful, sending an error message to the first mobile device and stopping the transaction.

7. A method according to any of the previous claims where the first application is loaded in the eSE or in the TEE during the first mobile device manufacture.

8. A method according to any of the previous claims where the transaction is a payment transaction, a user identity management transaction or an access control transaction.

9. A method according to any of the previous claims where the interaction between the first application and the user of the mobile device is done using a second application installed in the first mobile device and where the user access to the provider of user services is done by the second application

10. A method according to any of the previous claims where the at least one message is sent to the service provider via a Point of Sale Terminal which uses NFC technology.

11. A method according to any of the previous claims where the first application has an unique identification associated to the eSE or to the TEE of the first mobile device where the first application is loaded, which uniquely identifies said first application from other first applications loaded in other eSEs or TEEs respectively.

12. A method according to any of the previous claims where the unique asymmetric key is univocally associated to the first application and it is different to other asymmetric key assigned to other first applications of other users.

13. System for providing an authentication, integrity and confidentially service for transactions performed between a user of a first mobile device and a provider of user services through a mobile communications network, the system comprising the first mobile device comprising:
- Means for receiving from the user, at least a transaction request for the provider of user services;
- An embedded Secure Element, eSE, or a Trusted Execution Environment, TEE, where a first application has been loaded, where the first application is configured to, for each transaction request received by the mobile device:
- Verifying user identity for the authentication, integrity and confidentially service;
- If the user identity verification is successful, preparing at least one message to be sent to the provider of user services including transaction information and for each message prepared related to each transaction, calculating a signature for each message using an unique asymmetric key and including said signature in the message;
- Means for sending the at least one prepared message related to each transaction, to a server of the provider of user services through the mobile communications network.

14. An application for providing an authentication, integrity and confidentially service for transactions performed between an user of a first mobile device and a provider of user services through a mobile communications network, the application for use with a system in accordance with claim 13 and the application comprising:
- Means for, for each transaction request received in the first mobile device:
- Verifying user identity for the authentication, integrity and confidentially service;
- If the user identity verification is successful, preparing at least one message to be sent to the provider of user services including transaction information and for each message prepared related to each transaction, calculating a signature for each message using an unique asymmetric key and including said signature in the message;

15. A digital data storage medium for storing a computer program which comprises instructions causing a computer executing the program to perform the method according to any of the claims 1-12.
